# EUROPEAN PATENT APPLICATION

(11) **EP 4 234 350 A1**
(43) Date of publication of application: **30.08.2023**
(21) Application number: 22158284.4
(22) Date of filing: 23.02.2022
(51) Int. Cl.: B60T 17/04

(54) **PNEUMATIC CONNECTION ADAPTER**

(71) Applicant: KNORR-BREMSE Systeme für Nutzfahrzeuge GmbH, 80809 München (DE)
(72) Inventor: FARKAS, Gabor, 6000 Kecskemét (HU); PATIL, Sushant, 415002 Satara (IN)

(57) **Abstract**

A pneumatic connection adapter for connecting a pneumatic line to a vehicle valve includes: a first adapter body (110) with a first air passage (114), a second adapter body (120) with a second air passage (124), a filter unit (130), and a mounting portion (115). The first adapter body (110) is configured to be attached to the pneumatic line and to provide air through the first air passage (114). The second adapter body (120) is configured to be attached to the vehicle valve and to provide air through the second air passage (124). The filter unit (130) is configured to be inserted between the first air passage (114) and the second air passage (124) to filter the air passing through first air passage (114) and through the second air passage (124). The mounting portion (115) is configured to securely connect the first adapter body (110) with the second adapter body (120) while fixing the filter unit (130) therebetween.

## Description

The present invention relates to a pneumatic connection adapter, which is configured to connect a pneumatic line with a vehicle valve and, in particular, to an improvement of the reliability of pneumatic valves.

Valves may be exposed to harsh conditions such as moisture, dust or dirt that may interfere with their proper operation. For example, it is known that utility vehicles operating in forestry are subject to severe contaminations that have a detrimental effect on the safety of these utility vehicles and thus shall be prevented. The degree of contaminations inside a pneumatic valve may even compromise operation in emergency situations or other brake actions that are not tolerable.

Therefore, there is a demand for preventing valves from severe contaminations.

At least some of the problems mentioned above are overcome by a pneumatic connection adapter according to claim 1. The dependent claims refer to further advantageous realizations of the subject matter of claim 1.

The present invention relates to a pneumatic connection adapter configured to connect a pneumatic line to a vehicle valve (e.g. of pneumatic brake system of a utility vehicle). The pneumatic connection adapter includes: a first adapter body, a second adapter body, a filter unit, and a mounting portion. The first adapter body comprises a first air passage and is configured to be attached to the pneumatic line to provide air through the first air passage. The second adapter body comprises a second air passage and is configured to be attached to the vehicle valve to provide air through the second air passage. The filter unit is configured to be inserted between the first air passage and the second air passage to filter the air passing through first air passage and through the second air passage. The mounting portion is configured to securely connect the first adapter body with the second adapter body while fixing the filter unit therebetween.

The mounting portion may be releasable to clean or replace the filter unit. The releasable mounting between the first adapter body and the second adapter body may include a latching or locking mechanism to provide a fast and simple opening of the connection. The pneumatic line can be any line of a pneumatic brake system of a utility vehicle (e.g. a pressure supply line, a control line, an exhaust line). Similarly, the valve may be any pneumatic valve arranged in the brake system (e.g. a park valve, a shunt valve or others).

Optionally, the filter unit comprises a tubular spacer element and a filter element configured to be secured in the tubular spacer element. In particular, the tubular spacer element may be configured to be secured in the air passage. The filter element may be exchangeable or interchangeable, e.g. to replace it or to provide different degree of filtering. However, the filter unit may also be formed as one unitary component (not having two or more elements).

Optionally, the first adapter body comprises a ring-shaped abutment portion (e.g. surrounding the first air passage). The second adapter body may comprise a shoulder ring surrounding the second air passage. Upon connecting the first adapter body with the second adapter body, the ring-shaped abutment portion and the shoulder ring may sandwich the tubular spacer element.

Optionally, the filter element comprises a circumferential projection. The tubular spacer element may comprise a groove for receiving the circumferential projection inside the tubular spacer element.

Optionally, the filter element comprises an outer threading. The tubular spacer element may comprise an internal threaded portion for engaging with the outer threading of the filter element.

Optionally, the filter unit comprises a ring-shaped projection and the second adapter body may comprise a ring-shaped recess (or step or groove) configured to receive the ring-shaped projection of the filter unit to fixate the filter unit along the second air passage. Hence, the filter unit is axially fixed in the air passage.

Optionally, a circumferential gap formed between the filter unit and a surface of the second air passage. If the second adapter body comprises a shoulder ring surrounding the second air passage, then another gap may be formed between the shoulder ring and the filter unit. This provides the advantage the filter unit can be easily replaced and cannot stick together with the second adapter body. In addition, if the filter unit is clogged, some air can bypass the filter unit and the pneumatic system is not blocked.

Optionally, the second air passage is formed with a tapered internal diameter and the filter unit comprises a tapered outer diameter fitting into second air passage formed with the tapered internal diameter to fixate the fixate the filter unit along the second air passage.

Optionally, the first adapter body comprises a first attachment portion for attaching the first adapter body to the pneumatic line. The second adapter body may comprise a second attachment portion for attaching the second adapter body to the vehicle valve.

Further embodiments relate to a pneumatic brake system for a utility vehicle. The pneumatic brake system may comprise at least one valve having at least one valve port connected with a pneumatic line of the brake system. The pneumatic brake system may include a pneumatic connection adapter as described before to provide an interface between the pneumatic line and the at least one valve port.

Thus, embodiments overcome the contamination problems of conventional valves by utilizing a connection adapter with a particular filter arranged outside the valve. According to embodiments contaminations are withheld in a particularly designed pneumatic connection adapter at a pneumatic port of the valve. This filter collects the dirt, can easily be replaced and enables thus a proper operation of the valve - even in dirt environment.

Some examples of the adapted will be described in the following by way of examples only, and with respect to the accompanying figures, in which:
- Fig. 1: depicts a pneumatic connection adapter according to an embodiment of the present invention;
- Figs. 2A, 2B: show further details of the filter unit according to further embodiments; and
- Figs. 3A, 3B: show further details of the assembly of the filter unit inside the adapter according to embodiments.

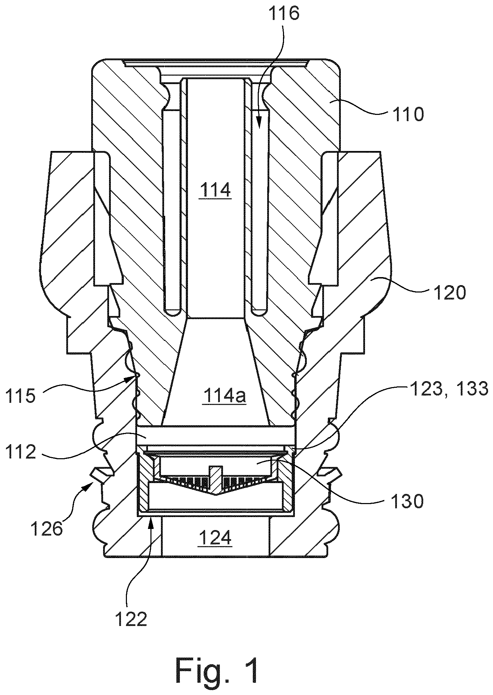

**Fig.1** depicts a pneumatic connection adapter according to an embodiment of the present invention. This adapter is configured to connect a pneumatic line with a valve (not shown in Fig. 1). The adapter comprises two adapter bodies, a first adapter body 110 with a first air passage 114 and a second adapter body 120 with a second air passage 124. The adapter may further comprise a filter unit 130 that is configured to be inserted between the first air passage 114 and the second air passage 124 to filter air passing through first air passage 114 and through the second air passage 124. Finally, the adapter comprises a mounting portion 115 configured to securely connect the first adapter body 110 with the second adapter body 120. At the same time the mounting portion 115 facilitates a fixing the filter unit 130 between the first air passage 114 and the second air passage 124.

The first adapter body 110 includes a first attachment portion 116 as a fitting to securely connect the pneumatic line to the first adapter body 110. The first attachment portion 116 may be formed as a ring-shaped recess (or groove) inside the first adapter body 110 configured to receive the pneumatic line (e.g. a tube). The ring-shaped attachment portion 116 extends around the first air passage 114. The second adapter body 120 comprises a second attachment portion 126 which is configured to connect the second adapter body 120 with a port or terminal of the valve. This second attachment portion 126 air-tightly fixes the adapter to the valve. It may comprise a threaded connection, an interlocking engagement, a snap-in connection or any other means that is able to provide the desired secure connection. Thus, the adapter provides fluid connection (interface) from the pneumatic line to the port of the valve or vice versa.

The first adapter body 110 may comprise an abutment portion 112 which may be formed as a ring-shaped stamp at an opposite end of the first attachment portion 116.

The second adapter body 120 may comprise a shoulder ring portion 122 facing the abutment portion 112 after connecting the first adapter bodies 110 and the second adapter bodies 120. The filter unit 130 may be sandwiched between the abutment portion 112 of the first adapter body 110 and the shoulder ring portion 122 of the second adapter body 120. The mounting portion 115 may be configured to securely connect the first adapter body 110 with the second adapter body 120 while fixing at the same time the filter unit 130 therebetween (e.g. without allowing a margin). The mounting portion 115 may comprise a threaded connection, an interlocking engagement, a snap-in connection or any other means that are able to provide the desired secure connection.

Thus, the filter unit 130 is placed inside the second adapter body 120. According to another embodiment the first air passage 114 may be enlarged in the region 114a at the filter unit 130 when compared to the region at the pneumatic line. This allows to collect dirt or other contaminations so that there is no back log into the pneumatic line during operations.

The filter unit 130 may further comprise a ring-shaped projection 133. The second adapter body 120 may comprise a ring-shaped recess 123 (or step or groove) which is configured to receive the ring-shaped projection 133 of the filter unit to fixate the filter unit along the second air passage 124. Hence, the filter unit 130 is axially fixed in the air passage 124.

Furthermore, a circumferential gap may be formed between the filter unit 130 and a surface of the second air passage 124. Another gap may be formed between the shoulder ring 122 and the filter unit 130. This provides the advantage the filter unit 130 can be easily replaced and cannot stick together with the second adapter body 120. In addition, if the filter unit 130 should be clogged, some air can bypass the filter unit 130 preventing a blocking of the whole pneumatic system.

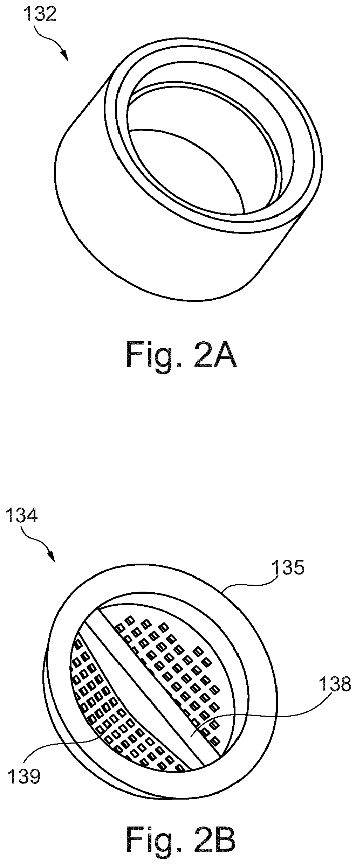

**Figs. 2A, 2B** show with further details of the filter unit 130 as it may be implemented according to embodiments. For example, the filter unit 130 may comprise a tubular spacer element 132 and a filter element 134 that can be inserted into the tubular space element 132. The filter element 134 may be interchangeable so that different filter elements 134 may be usable. Both elements are an interface between the first air passage 114 and the second air passage 124.

**Fig. 2A** shows an embodiment for the tubular spacer element 132 with an inner through hole or opening. The tubular spacer element 132 has a predetermined height in the axial direction in order to separate the abutment portion 112 of the first adapter body 110 and the shoulder portion 122 of the second adapter body 120. The tubular spacer element 132 may thus act as a spacer between the abutment portion 112 of the first adapter body 110 and the shoulder portion 122 of the second adapter body 120. The height in the axial direction of the tubular spacer element 132 may be adjusted such that a fixation of the first adapter body 110 to the second adapter body 120 presses the tubular spacer element 132 onto the shoulder portion 122 to provide an airtight connection. The filter unit 130 is therefore securely fixed.

**Fig. 2B** shows an embodiment for the filter element 134 with a plurality of filter holes 139 (or some other filter means) to withhold dirt or dust in the air flowing through the air passages 114, 124. The plurality of filter holes 139 are arranged in a circular way in a dome-shaped separation wall to provide a collection region for the withheld dirt and dust. The filter element 134 is configured to be secured inside the tubular spacer element 132. For this, the filter element 134 may comprise a circumferential projection 135 which extends radially outwards to be secured inside the tubular body 132. Furthermore, the filter element 134 may comprise a grab element 137 which is configured to be grabbed by a user to enable an easy replacement of the filter unit 130.

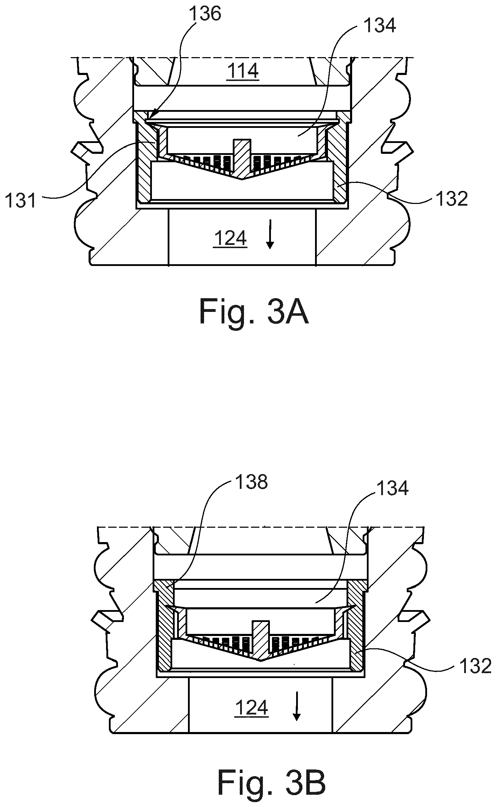

**Figs. 3A, 3B** show further details of the fixation of the filter element 134 inside the tubular spacer element 132 and, in addition, of the placement of the filter unit 130 between the first adapter body 110 and the second adapter body 120.

**Fig. 3A** shows an embodiment of the tubular spacer element 132 with a circumferential groove 136 in the through hole of the tubular body 132. The groove 136 is configured to receive the circumferential projection 135 of the filter element 134 and provides a tight and secure fixation of the filter element 134 inside the tubular spacer element 132.The filter element 134 may comprise a material with a certain flexibility to be pressed inside the tubular spacer element 132. For example, the filter element 134 may comprise a plastic material or rubber or another elastic material to press the circumferential projection 135 inside the circumferential groove 136.

The tubular body 132 may further comprise a narrowing 131 (in the radial direction) to provide a support for the circumferential projection 135 of the filter element 134. This narrowing 131 supports the filter element 134 so that it remains at its position even if high pressure air flows through the air passages 114, 124 (as indicated by the arrow). The filter element 134 may also include a tubular section which is received by the narrowing 131 to provide a secure fit. Therefore, the tubular spacer element 132 can securely support the filter element 134.

The second air passage 124 may also be formed with a tapered internal diameter and the tubular body 132 may comprise a tapered outer diameter fitting into second air passage 124 formed with the tapered internal diameter to fixate the fixate the filter unit along the second air passage 124.

**Fig. 3B** shows another embodiment for securing the filter element 134 inside the tubular spacer element 132. In this embodiment, the inner section of the tubular spacer element 132 comprises a threaded inner portion 138 which is configured to engage with the circumferential projection 135 of the filter element 134. Alternatively or additionally, the filter element 134 may comprise an outer threaded portion along its tubular section. The threaded portion 138 of the tubular spacer element 132 can thus engage with the exemplary outer threaded portion of the filter element 134.

Embodiments are particularly suitable for park brake valves or shunt valves and provide the advantage that no additional space is needed to accommodate the filter unit 130, because the adapter may be formed as part of a pneumatic connection. Furthermore, when the pneumatic connection is released, the filter element 132 can easily be replaced and/or the dirt can be removed. Another advantage relates to the fact that a pneumatic terminal of any type of valve (e.g. with an internal threaded portion) can be easily used to insert the adapter according to embodiments.

The description and drawings merely illustrate the principles of the disclosure. It will thus be appreciated that those skilled in the art will be able to devise various arrangements that, although not explicitly described or shown herein, embody the principles of the disclosure and are included within its scope.

Furthermore, while each embodiment may stand on its own as a separate example, it is to be noted that in other embodiments the defined features can be combined differently, i.e. a particular feature descripted in one embodiment may also be realized in other embodiments. Such combinations are covered by the disclosure herein unless it is stated that a specific combination is not intended.

### LIST OF REFERENCE SIGNS

- 110: first adapter body
- 112: abutment portion
- 114: first air passage
- 114a: enlarged region of air passage
- 115: mounting portion
- 116: first attachment portion
- 120: second adapter body
- 122: ring shoulder
- 123: ring-shaped recess or groove
- 124: second air passage
- 126: second attachment portion
- 130: filter unit
- 131: narrowing portion
- 132: tubular spacer element
- 133: ring-shaped projection
- 134: filter element
- 135: circumferential projection
- 136: groove or recess
- 137: grab element
- 138: threaded portion
- 139: filter means (e.g. holes in a separation wall)

## Claims

1. A pneumatic connection adapter for connecting a pneumatic line to a vehicle valve,
**characterized by**
- a first adapter body (110) with a first air passage (114), the first adapter body (110) being configured to be attached to the pneumatic line and to provide air through the first air passage (114);
- a second adapter body (120) with a second air passage (124), the second adapter body (120) being configured to be attached to the vehicle valve and to provide air through the second air passage (124);
- a filter unit (130) configured to be inserted between the first air passage (114) and the second air passage (124) to filter the air passing through first air passage (114) and through the second air passage (124); and
- a mounting portion (115) configured to securely connect the first adapter body (110) with the second adapter body (120) while fixing the filter unit (130) therebetween.

2. The adapter according to claim 1,
**characterized in that** the filter unit (130) comprises:
a tubular spacer element (132) and a filter element (134) configured to be secured in the spacer element (132), wherein the tubular spacer element (132) and the filter element (134) are separable or formed as one piece.

3. The adapter according to claim 2,
**characterized in that**
the filter element (134) comprises a circumferential projection (135) and the tubular spacer element (132) comprises a groove (136) for receiving the circumferential projection (135) inside the tubular spacer element (132).

4. The adapter according to claim 2,
**characterized in that**
the filter element (134) comprises an outer threading (135) and the tubular spacer element (132) comprises an internal threaded portion (138) for engaging with the outer threading (135) of the filter element (134).

5. The adapter according to one of claims 2 to 4,
**characterized in that**
- the first adapter body (110) comprises a ring-shaped abutment portion (112), and
- the second adapter body (120) comprises a shoulder ring (122) surrounding the second air passage (124),
wherein, upon connecting the first adapter body (110) with the second adapter body (120), the ring-shaped abutment portion (112) and the shoulder ring (122) sandwich the tubular spacer element (132).

6. The adapter according to one of the preceding claims,
**characterized in that**
the filter unit (130) comprises a ring-shaped projection (133) and the second adapter body (120) comprises a ring-shaped recess (123) configured to receive the ring-shaped projection (133) of the filter unit (130) to fixate the filter unit (130) along the second air passage (124).

7. The adapter according to claim 6,
**characterized by**
a circumferential gap formed between the filter unit (130) and a surface of the second air passage (124).

8. The adapter according to claim 6 or claim 7, wherein the second adapter body (120) comprises a shoulder ring (122) surrounding the second air passage (124),
**characterized by**
a gap formed between the shoulder ring (122) and the filter unit (130).

9. The adapter according to one of the preceding claims,
**characterized in that**
the second air passage (124) is formed with a tapered internal diameter and the filter unit (130) comprises a tapered outer diameter fitting into the tapered intern diameter of the second air passage (124) to fixate the fixate the filter unit (130) along the second air passage (124).

10. The adapter according to one of the preceding claims,
**characterized in that**
the first adapter body (110) comprises a first attachment portion (116) for attaching the first adapter body (110) to the pneumatic line; and
the second adapter body (120) comprises a second attachment portion (126) for attaching the second adapter body (120) to the vehicle valve.

11. A pneumatic brake system for a utility vehicle with at least one valve having at least one valve port connected with a pneumatic line,
**characterized by**
an pneumatic connection adapter according to one of the preceding claims providing an interface between the pneumatic line and the at least one valve port.
